# EUROPÄISCHE PATENTANMELDUNG

(11) **EP 1 521 066 A1**
(43) Veröffentlichungstag der Anmeldung: **06.04.2005**
(21) Anmeldenummer: 04022351.3
(22) Anmeldetag: 20.09.2004
(51) Int. Cl.: G01F 23/26

(54) **Kapazitives Füllstandsmesssystem**

(30) Priorität: 01.10.2003 DE 10345708
(71) Anmelder: Volkswagen AG, 38436 Wolfsburg (DE)
(72) Erfinder: Rossmann, Werner, 38446 Wolfsburg (DE)
(74) Vertreter: Banzer, Hans-Jörg, Dipl.-Ing.

(57) **Zusammenfassung**

Die Erfindung betrifft ein kapazitives Füllstand-Messsystem, insbesondere zur Erfassung eines Füllstandes eines Kraftstoff-Behälters in einem Fahrzeug. Erfindungsgemäß sind Messelektroden 10a, welche zusammen mit einer leitfähigen Oberfläche, z.B. des Kraftstoff-Behälters, Mess-Kondensatoren bilden, zusammen mit einer Auswertungselektronik 16 auf einem flexiblen, folienartigen Träger 20 angeordnet. Die Auswertungselektronik erzeugt ein dem Füllstand des Behälters entsprechendes Ausgangssignal, welches über eine steckerartige Verbindung verfügbar ist. Das Ausgangssignal ist mit einem in dem Fahrzeug verwendeten Bus, z.B. dem so genannten CAN-Bus, kompatibel.

## Beschreibung

Die Erfindung betrifft ein Füllstand-Messsystem, im Speziellen ein kapazitives Füllstand-Messsystem zur Erfassung des Füllstandes von Kraftstoff-Behältern in Fahrzeugen.

Herkömmliche in Kraftfahrzeugen zur Füllstanderfassung eines Kraftstoff-Behälters eingesetzte Füllstand-Messsysteme basieren häufig auf einem Schwimmer. Der Schwimmer bewegt sich mit einem Flüssigkeitspegel und eine Position des Schwimmers wird erfasst. Beispielsweise ist der Schwimmer mechanisch mit einem Stellelement, z.B. einem Potentiometer, verbunden. Der Füllstand kann durch Auswerten des Widerstandes des Potentiometers bestimmt werden. Hierfür umfasst ein derartiges Füllstand-Messsystem üblicherweise Mittel zur Berücksichtigung einer Füllhöhen-Füllvolumen-Kennlinie, welche eine Zuordnung einer Füllhöhe, d.h. einer Position des Schwimmers, zu einem entsprechenden Füllvolumen erlauben. Dies kann durch eine geeignete Ausgestaltung des Potentiometers erfolgen. Probleme bei diesen mechanischen Füllstand-Messsystemen bestehen z.B. in einer geringen Genauigkeit und Verschleiß von beweglichen Teilen.

Kapazitive Füllstandsensoren erfordern keine bewegliche Teile und vermeiden somit Verschleiß aufgrund von mechanischer Beanspruchung. Auch ermöglicht der Einsatz von kapazitiven Füllstandsensoren in einem Füllstand-Messsystem eine hohe Präzision bei der Bestimmung der Füllhöhe, und somit eine genaue Füllstanderfassung.

Kapazitive Füllstandsensoren nutzen den Unterschied der dielektrischen Konstanten zwischen der betreffenden Flüssigkeit und dem oberhalb des Flüssigkeitspegels in dem Behälter oder Tank befindlichen Gasvolumen. Elektroden, welche im Wesentlichen einen oder mehrere Kondensatoren bilden, sind derart in dem Behälter angeordnet, dass der Raum zwischen den Elektroden der Flüssigkeit zugänglich ist, so dass sich die Kapazität des von den Elektroden gebildeten Kondensators von der Position des Flüssigkeitspegels abhängt.

Verschiedenartige Formen von kapazitiven Füllstandsensoren sind bekannt, wobei zumeist eine Vielzahl von Kondensatoren vorgesehen ist. Ein Kondensator kann dabei als Mess-Kondensator, d.h. direkt zur Füllhöhenbestimmung, oder aber auch als Referenz-Kondensator, z.B. bei einer Differenz-Messung oder zur Kompensation von Variationen der dielektrischen Konstanten der Flüssigkeit zum Einsatz kommen. Die Kondensatoren können als kapazitive Niveauschalter eingesetzt sein, d.h. es wird lediglich erfasst, ob sich ein betreffender Kondensator oberhalb oder unterhalb des Flüssigkeitspegels befindet, oder es kann eine Änderung der Kapazität kontinuierlich erfasst werden.

Im Allgemeinen, insbesondere jedoch im Fall einer kontinuierlichen Erfassung der Kapazitätsänderung bestehen hohe Anforderungen an die Genauigkeit der Messung. Da der Raum zwischen den Elektroden der Kondensatoren der Flüssigkeit zugänglich sein muss, bestehen vergleichsweise hohe Abstände zwischen den Elektroden, was wiederum mit vergleichsweise kleinen Kapazitäten der Kondensatoren einhergeht.

Aus der EP 0587 728 B1 sind kapazitive Füllstandsensoren bekannt, wobei die Elektroden auf flexible Träger aufgebracht sind. Die darin beschriebenen Füllstandsensoren sind speziell für sehr flache Behälter, wie z.B. die Ölwanne eines Kraftfahrzeugs, geeignet und umfassen eine Vielzahl identischer Kondensatoren, wobei jeder Kondensator von den übrigen Kondensatoren unabhängige Elektroden aufweist, welche separat ansteuerbar sind. Dies ist vorzugsweise dadurch bewerkstelligt, dass eine erste Elektrode der Kondensatoren auf einem ersten flexiblen Träger aufgebracht ist und eine zweite Elektrode der Kondensatoren auf einem zweiten flexiblen Träger aufgebracht ist. Beide Träger sind mit einer Auswertungselektronik verbunden, welche die Kondensatoren der Reihe nach mit einer Referenz, welche durch einen Kondensator auf einer ersten Stufe, d.h. im unteren Bereich des Behälters, gebildet ist, vergleicht. Auf Basis des Vergleichs wird ein logisches Signal generiert, d.h. die Kondensatoren werden als Niveauschalter eingesetzt. Der Einsatz von flexiblen Trägern für die Elektroden und deren Zuleitungen bietet den Vorteil einer einfachen und präzisen Massenfertigung. Weiterhin können auf flexible Träger aufgebrachte Messelektroden in einer Vielzahl unterschiedlicher Sensorgeometrien eingesetzt werden.

Bei der Füllstanderfassung in einem Kraftstoff-Behälter eines Fahrzeuges ist eine möglichst genaue Erfassung des Füllstandes, besonders im Bereich niedriger Füllstände erwünscht. Auf Niveauschaltern basierende Füllstand-Messsysteme erfassen den Füllstand in Stufen, so dass die genaue Bestimmung des Füllstandes, insbesondere bei einem Füllstand im Bereich unterhalb eines untersten Niveauschalters nicht möglich ist. Um die Genauigkeit der Füllstanderfassung zu steigern, ist der Einsatz von zusätzlichen Kondensatoren erforderlich.

Eine Aufgabe der vorliegenden Erfindung ist es daher ein kapazitives Füllstand-Messsystem bereitzustellen, welches das oben beschriebene Problem löst und insbesondere mit geringem Aufwand eine hohe Genauigkeit bietet und in einer Vielzahl unterschiedlicher Sensorgeometrien einsetzbar ist.

Diese Aufgabe wird durch ein Füllstand-Messsystem mit den Merkmalen des Anspruchs 1 gelöst. Die abhängigen Ansprüche definieren bevorzugte oder vorteilhafte Ausführungsformen der Erfindung.

Das erfindungsgemäße Füllstand-Messsystem umfasst einen kapazitiven Füllstandsensor und eine Auswertungselektronik. Der kapazitive Füllstandsensor umfasst dabei mindestens einen Mess-Kondensator, der aus einer Messelektrode und einer Gegenelektrode gebildet ist. Die Messelektrode und die Auswertungselektronik sind auf einem gemeinsamen flexiblen Träger aufgebracht.

Vorzugsweise umfasst das Füllstand-Messsystem eine Vielzahl von Mess-Kondensatoren. Die Gegenelektrode kann dabei durch eine für alle Mess-Kondensatoren gemeinsame Gegenelektrode gebildet sein, z.B. durch eine leitende Oberfläche, auf welcher der flexible Träger in einem definierten Abstand aufgebracht ist. Bei der leitenden Oberfläche kann es sich insbesondere um einen Teil eines Behälters, z.B. eines metallischen Kraftstoff-Behälters handeln.

Die Auswertungselektronik ist vorzugsweise derart ausgestaltet, dass sie mindestens ein Signalerzeugungsmittel umfasst, welches eine Impulsfolge erzeugt, wobei der Abstand und/oder die Breite der Impulse von der Kapazität eines auszuwertenden Mess-Kondensators abhängt. Bei dem Signalerzeugungsmittel kann es sich beispielsweise um eine astabile Multivibratorschaltung handeln, welche als ein frequenzbestimmendes Element den jeweiligen Mess-Kondensator umfasst.

Es ist dabei besonders vorteilhaft, die Auswertungselektronik mit Schaltmitteln zu versehen, so dass wahlweise verschiedene der Mess-Kondensatoren mit einem Signalerzeugungsmittel verschaltet werden können. Dies geschieht vorzugsweise durch Einsatz eines Multiplexers, welcher geeignet ist, jeweils eine der Messelektroden mit dem Signalerzeugungsmittel zu verschalten.

Die Auswertung des Füllstandes erfolgt vorzugsweise, indem die Auswertungselektronik die von dem Signalerzeugungsmittel oder den Signalerzeugungsmitteln erzeugten Impulsfolgen auswertet und abhängig davon ein dem Füllstand des Fahrzeugs entsprechendes Ausgangssignal erzeugt. Hierfür ist es vorteilhaft, wenn die Auswertungselektronik über Informationen bezüglich der Geometrie und Position der Mess-Kondensatoren, sowie der Geometrie des Behälters, in welchem das Füllstand-Messsystem eingesetzt ist, verfügt. Die Auswertung kann sich darauf beschränken, zu erfassen, ob sich die Mess-Kondensatoren jeweils oberhalb oder unterhalb des Flüssigkeitspegels befinden. Besonders vorteilhaft ist es jedoch, kontinuierliche Änderungen der Kapazitäten zu erfassen, um dadurch bei gleicher Anzahl von Mess-Kondensatoren eine verbesserte Genauigkeit der Füllstanderfassung zu erreichen. Weiterhin kann es vorteilhaft sein, mindestens einen der Mess-Kondensatoren gleichzeitig als Referenz-Kondensator zu verwenden, z.B. um eine Differenzmessung durchzuführen.

Bei einem Einsatz des Füllstand-Messsystems in einem Fahrzeug ist es vorteilhaft die Auswertungselektronik derart zu gestalten, dass ein mit den in dem Fahrzeug verwendeten Signalübertragungssystemen kompatibles Ausgangssignal erzeugt wird. Dies kann beispielsweise dadurch bewerkstelligt sein, dass das Füllstand-Messsystem den Füllstand über einen Datenbus, z.B. den so genannten CAN-Datenbus, bereitstellt. Weitere Auswertungen bzw. eine Anzeige des Füllstandes können dann über eine zentrale Elektronik des Fahrzeuges erfolgen.

Weiterhin kann es bei bestimmten Anwendungen, z.B. bei komplizierten Geometrien des Behälters oder Tanks, vorteilhaft sein, dass das Füllstand-Messsystem weitere flexible Träger umfasst. Die flexiblen Träger können an verschiedenen Positionen in dem Behälter angeordnet sein. Hierdurch werden Vergleichsmessungen ermöglicht. Dies ist z.B. bei einer Neigung des Behälters von Vorteil.

Das erfindungsgemäße Füllstand-Messsystem bietet den Vorteil eines geringen Herstellungsaufwands. Die flexiblen Träger sind in einer Vielzahl von Sensorgeometrien einsetzbar. Die Integration der Auswertungselektronik auf einem gemeinsamen Träger mit den Messelektroden ermöglicht eine vereinfachte Verarbeitung. Insbesondere werden hierdurch kurze Signalübertragungswege ohne zusätzliche Verbindungsstellen erreicht. Dies ermöglicht eine genauere Auswertung der Kapazitäten. Insbesondere können kontinuierliche Änderungen der Kapazitäten erfasst und ausgewertet werden, so dass insgesamt eine erhöhte Genauigkeit der Füllstandmessung möglich ist. In diesem Zusammenhang ist der Einsatz der oben beschriebenen Signalerzeugungsmittel besonders vorteilhaft, da er mit geringem Schaltungsaufwand eine genaue Erfassung der Kapazität ermöglicht. Die Größe der Auswertungselektronik kann dadurch gering gehalten werden, so dass diese auf dem flexiblen Träger untergebracht werden kann, ohne dass der Platzbedarf oder die Flexibilität des Trägers negativ beeinflusst werden.

Die Erfindung ist besonders geeignet zur Füllstanderfassung in dem Kraftstoff-Behälter eines Fahrzeuges, ist selbstverständlich jedoch nicht darauf beschränkt.

Weitere Vorteile der Erfindung ergeben sich aus der folgenden detaillierten Beschreibung eines bevorzugten Ausführungsbeispiels.

Nachfolgend wird die vorliegende Erfindung unter Bezugnahme auf die beigefügten Zeichnungen näher erläutert.
Fig. 1 zeigt einen flexiblen Träger mit Messelektroden und einer Auswertungselektronik zum Einsatz in einem Füllstand-Messsystem gemäß einem Ausführungsbeispiel der vorliegenden Erfindung,
Fig. 2 zeigt schematisch eine Seitenansicht einer Anordnung von Messelektroden auf einem flexiblen Träger wie in Fig. 1 gezeigt in einem Kraftstoff-Behälter,
Fig. 3 zeigt eine perspektivische Darstellung des flexiblen Trägers von Fig. 1, der in einem Rohr angeordnet ist,
Fig. 4 zeigt vergrößert die Anordnung der Messelektroden gegenüber einer leitfähigen Oberfläche in einem Behälter, und
Fig. 5 zeigt schematisch die Auswertungselektronik zur Verwendung in einem Füllstand-Messsystem gemäß dem Ausführungsbeispiel der vorliegenden Erfindung.

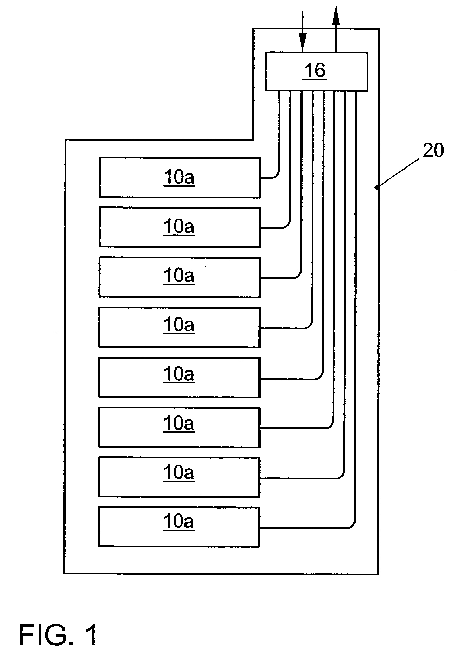

In Fig. 1 ist ein flexibler Träger 20 gezeigt, auf welchem mehrere Messelektroden 10a sowie eine Auswertungselektronik 16 angeordnet sind. Die Messelektroden 10a sind durch eine metallische Beschichtung des flexiblen Trägers 20 gebildet. Bei dem flexiblen Träger 20 handelt es sich um ein folienartiges Kunststoffmaterial. Die Messelektroden 10a sind jeweils durch eine Zuleitung mit der Auswertungselektronik 16 verbunden. Die Zuleitungen sind dabei ebenfalls durch eine metallische Beschichtung des flexiblen Trägers 20 gebildet. Die Auswertungselektronik 16 weist einen Signalausgang auf von dem aus weitere Zuleitungen zu einer steckerartigen Verbindung geführt sind. Die Zuleitungen und die Messelektroden 10a sind durch Photolithographie mit einem darauf folgenden Ätzschritt aus einer zunächst durchgängigen metallischen Beschichtung des flexiblen Träger herausgeätzt. Die Auswertungselektronik 16 ist in Form von Halbleiterchips, vorzugsweise jedoch in Form eines einzigen Halbleiterchips, auf dem flexiblen Träger 20 aufgebracht und mit den Zuleitungen verbunden.

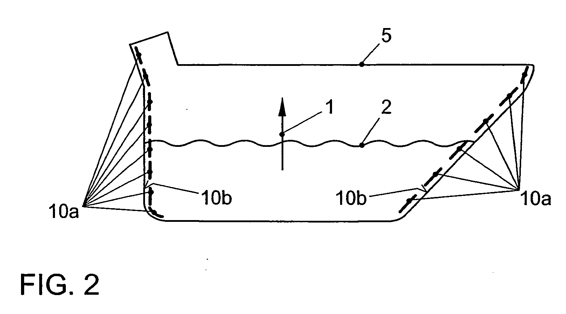

Fig. 2 zeigt schematisch eine Anordnung von Messelektroden wie im Zusammenhang mit Fig. 1 beschrieben in einem Behälter 5, z.B. einem Kraftstoff-Behälter eines Fahrzeuges. Der Behälter weist zumindest teilweise metallische Oberflächen 10b auf, oder ist sogar vollständig aus Metall hergestellt. Vollständig aus Metall hergestellte Kraftstoff-Behälter werden z.T. von Sicherheitsbestimmungen gefordert. Die flexiblen Träger 20 sind in einem definierten Abstand entlang der metallischen Oberflächen 10b angeordnet, so dass die Messelektroden 10a auf dem flexiblen Träger 20 zusammen mit den leitfähigen Oberflächen 10b Mess-Kondensatoren bilden. Die Anordnung ist dabei derart gestaltet, dass ein Raum zwischen den Messelektroden 10a und den leitfähigen Oberflächen 10b der Flüssigkeit, z.B. einem Kraftstoff, zugänglich ist. Die Mess-Kondensatoren sind im Wesentlichen entlang einer Füllrichtung 1 des Behälters angeordnet. Die Füllrichtung 1 bezeichnet dabei die Richtung, entlang welcher sich ein Flüssigkeitspegel 2 bewegt, wenn der Behälter 5 gefüllt oder entleert wird. In Fig. 2 sind zwei mögliche Anordnungen der auf dem flexiblen Träger 20 befindlichen Messelektroden 10a in dem Behälter 5 gezeigt, wobei in dem einen Fall die Mess-Kondensatoren hauptsächlich parallel zu der Füllrichtung 1 angeordnet sind und in dem anderen Fall die Mess-Kondensatoren hauptsächlich in schräg zu der Füllrichtung 1 angeordnet sind. In beiden Fällen sind die Mess-Kondensatoren im Wesentlichen entlang der Füllrichtung 1 angeordnet, d.h. der Flüssigkeitspegel bewegt sich beim Füllen bzw. Entleeren des Behälters 5 auch entlang der Mess-Kondensatoren.

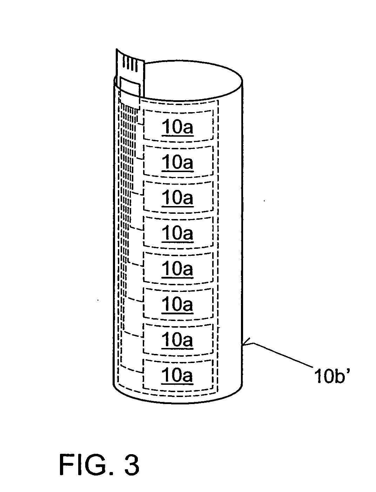

Fig. 3 zeigt eine Anordnung des flexiblen Trägers 20 in einem Rohr, wobei das Rohr vollständig metallisch ist bzw. eine metallische Oberfläche 10b aufweist. Das Rohr ist in einem Behälter angeordnet, dessen Füllstand erfasst werden soll, und kann gleichzeitig z.B. einer Entnahme der Flüssigkeit aus dem Behälter dienen. Der flexible Träger 20 ist derart in dem Rohr angeordnet, dass ein Raum zwischen den Messelektroden 10a und der metallischen Oberfläche 10b des Rohres der Flüssigkeit zugänglich ist. Zur Erfassung des Füllstandes ist das Rohr im Wesentlichen entlang der Füllrichtung 1 des Behälters angeordnet. Die Auswertungselektronik 16 sowie die steckerartige Verbindung sind dabei in einem oberen Abschnitt des Rohres oder außerhalb eines oberen Abschnitts des Rohres angeordnet.

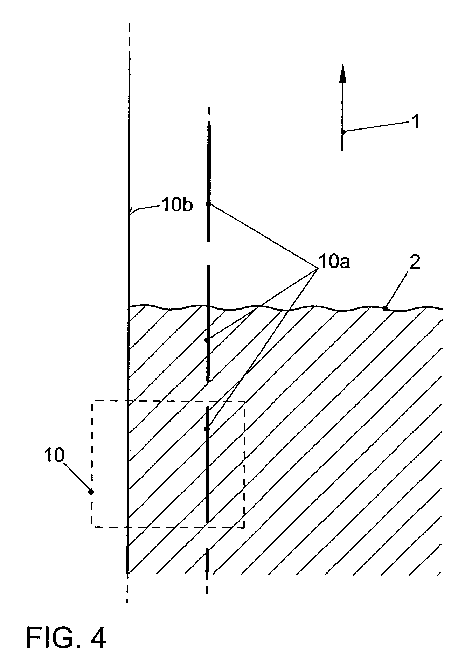

Fig. 4 zeigt eine vergrößerte Ansicht der Anordnung von Messelektroden 10a gegenüber der leitfähigen Oberfläche 10b. Die Messelektroden 10a bilden zusammen mit der leitfähigen Oberfläche 10b Mess-Kondensatoren 10. In Fig. 4 sind Mess-Kondensatoren 10 gezeigt, von denen sich einer der Mess-Kondensatoren 10 vollständig unterhalb des Flüssigkeitspegels 2 befindet, ein weiterer der Mess-Kondensatoren 10 sich teilweise unterhalb des Flüssigkeitspegels 2 befindet und noch ein weiterer der Mess-Kondensatoren 10 sich vollständig oberhalb des Flüssigkeitspegels 2 in einem Gasvolumen befindet. Aufgrund von unterschiedlichen dielektrischen Konstanten der Flüssigkeit und des Gasvolumens weisen die oben genannten Mess-Kondensatoren 10 unterschiedliche Kapazitäten auf. Typischerweise weist der erstgenannte, vollständig in der Flüssigkeit befindliche Mess-Kondensator 10 eine Kapazität, auf welche größer ist als die der übrigen genannten Mess-Kondensatoren 10. Die Kapazität des teilweise unterhalb des Flüssigkeitspegels 2 befindlichen Mess-Kondensators 10 weist einen Wert auf, der zwischen den Werten der beiden anderen genannten Mess-Kondensatoren 10 liegt. Jeder der Mess-Kondensatoren 10 erfasst einen bestimmten Füllhöhenbereich. Die Position des Flüssigkeitspegels 2 ist bestimmbar, indem die Auswertungselektronik 16 auswertet, welche der Mess-Kondensatoren 10 sich unterhalb bzw. oberhalb des Flüssigkeitspegels 2 befinden. Die Mess-Kondensatoren 10 können somit als Niveauschalter eingesetzt werden. Eine präzisere Bestimmung der Position des Flüssigkeitspegels 2 und damit eine genauere Erfassung des Füllstandes ist durch eine Auswertung kontinuierlicher Änderungen der Kapazität der Mess-Kondensatoren 10 möglich, d.h. durch eine Erfassung der Zwischenwerte der Kapazität für den Mess-Kondensator 10, welcher sich teilweise unterhalb des Flüssigkeitspegels 2 befindet.

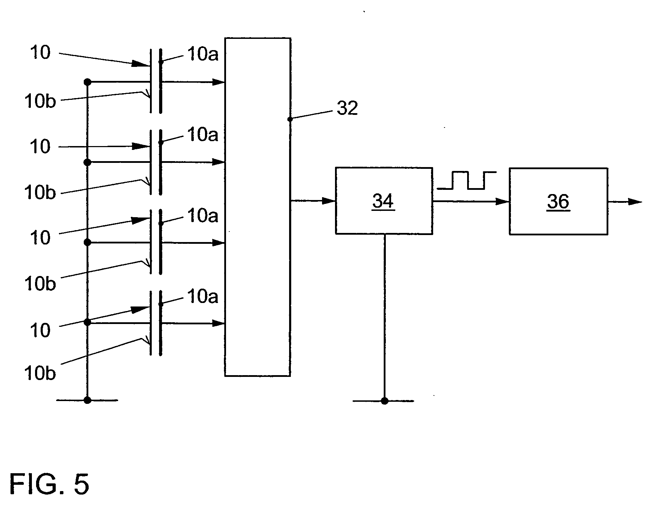

Fig. 5 zeigt schematisch den Aufbau der Auswertungselektronik 16 zum Auswerten der Kapazitäten der Mess-Kondensatoren 10 in einem Füllstand-Messsystem gemäß dem oben beschriebenen Ausführungsbeispiel der vorliegenden Erfindung. Die Auswertungselektronik 16 ist mit den Messelektroden 10a auf dem gemeinsamen flexiblen Träger 20 angeordnet, so dass kurze Signalübertragungswege von den Messelektroden 10a zu der Auswertungselektronik 16 gewährleistet sind. Die Elektroden 10b sind durch die gemeinsame Gegenelektrode in Form des metallischen Rohrs 10b', der leitfähigen Oberfläche des Behälters 10b oder einer weiteren, in dem Behälter geeignet angeordneten leitfähigen Oberfläche gebildet, d.h. sie liegen auf einem gemeinsamen Potential. Die Messelektroden 10a sind über ein Schaltmittel 32 mit einem Signalerzeugungsmittel in Form einer Signalerzeugungsschaltung 34 verbunden. Das Schaltmittel 32 ist derart ausgestaltet, dass es wahlweise eine der Elektroden 10a mit der Signalerzeugungsschaltung 34 verschalten kann, so dass bei einer von der Signalerzeugungsschaltung 34 erzeugten Impulsfolge der Abstand der Impulse durch die Kapazität des jeweiligen Mess-Kondensators 10 bestimmt ist. Hierfür umfasst die Signalerzeugungsschaltung 34 vorzugsweise eine Multivibratorschaltung. Alternativ kann auch ein Tastverhältnis der Impulsfolge durch die Kapazität bestimmt sein. Eine Verarbeitungsvorrichtung 36 verarbeitet die den einzelnen Mess-Kondensatoren 10 entsprechenden Impulsfolgen und erzeugt darauf basierend ein Ausgangssignal, welches dem Füllstand des Behälters entspricht. Die Verarbeitungsvorrichtung 36 umfasst dafür Informationen bezüglich der Geometrie des Behälters und der Positionen der einzelnen Sensorelemente oder Mess-Kondensatoren 10. Das Ausgangssignal steht dabei über einen bestimmten standardisierten Bus, z.B. den so genannten CAN-Bus, zur Verfügung, so dass das Signal direkt von einer zentralen Fahrzeugelektronik verarbeitet werden kann.

Die oben beschriebene Schaltungsanordnung für die Auswertungselektronik 16 ist besonders vorteilhaft, da sie eine extrem kompakte Bauweise ermöglicht. Sie eignet sich daher besonders für den Einsatz in kompakten, auf einem flexiblen Träger angeordneten Anordnungen von Messelektroden und Auswertungselektronik.

Insbesondere ist die Auswertungselektronik 16 derart ausgestaltet, dass sie kontinuierliche Änderungen der Kapazität der Mess-Kondensatoren 10 erfassen kann. Hierdurch können die Mess-Kondensatoren 10 nicht nur als Niveauschalter betrieben werden, sondern es ist auch eine kontinuierliche Erfassung der Füllstandänderung innerhalb der von den Mess-Kondensatoren 10 erfassten Füllhöhenbereiche möglich. Hierdurch wird bei einer vergleichbaren Anzahl von Mess-Kondensatoren 10 eine genauere Füllstanderfassung ermöglicht.

### BEZUGSZEICHENLISTE

- 1: Füllrichtung
- 2: Flüssigkeitspegel
- 5: Behälter
- 10: Mess-Kondensator
- 10a: Messelektrode
- 10b, 10b': leitfähige Oberfläche
- 16: Auswertungselektronik
- 20: flexibler Träger
- 32: Schaltmittel
- 34: Signalerzeugungsschaltung
- 36: Verarbeitungsvorrichtung

## Patentansprüche

1. Füllstand-Messsystem zur Erfassung eines Füllstandes in einem Behälter (5), umfassend einen kapazitiven Füllstandsensor mit mindestens einer Messelektrode (10a) sowie mindestens einer Gegenelektrode (10b) und eine Auswertungselektronik (16), welche Kapazitäten von durch die mindestens eine Messelektrode (10a) und die mindestens eine Gegenelektrode (10b) gebildeten Mess-Kondensatoren (10) auswertet, **dadurch gekennzeichnet, dass** die mindestens eine Messelektrode (10a) und die Auswertungselektronik (16) auf einem gemeinsamen flexiblen Träger (20) aufgebracht sind.

2. Füllstand-Messsystem nach Anspruch 1, **dadurch gekennzeichnet, dass** die Gegenelektrode (10b) durch eine leitende Oberfläche gebildet ist, welche sich in einem bestimmten Abstand von dem flexiblen Träger (20) befindet.

3. Füllstand-Messsystem nach Anspruch 2, **dadurch gekennzeichnet, dass** es sich bei der leitenden Oberfläche um einen Teil des Behälters (5) handelt.

4. Füllstand-Messsystem nach einem der vorhergehenden Ansprüche, **dadurch gekennzeichnet, dass** die Auswertungselektronik (16) mindestens ein Signalerzeugungsmittel (34) umfasst, welches eine Impulsfolge erzeugt, wobei die Breite und/oder der Abstand der Impulse von der Kapazität jeweils einem der Mess-Kondensatoren (10) abhängt.

5. Füllstand-Messsystem nach Anspruch 4, **dadurch gekennzeichnet, dass** die Auswertungselektronik (16) Schaltmittel (32) umfasst, welche wahlweise eine von mehreren Messelektroden (10a) mit dem mindestens einen Signalerzeugungsmittel (34) verschalten können.

6. Füllstand-Messsystem nach Anspruch 4 oder 5, **dadurch gekennzeichnet, dass** die Auswertungselektronik (16) derart ausgestaltet ist, dass sie den jeweiligen Mess-Kondensatoren (10) entsprechende Impulsfolgen auswertet und davon abhängig ein dem Füllstand des Behälters (5) entsprechendes Ausgangsignal erzeugt.

7. Füllstand-Messsystem nach einem der vorhergehenden Ansprüche, **dadurch gekennzeichnet, dass** die Auswertungselektronik (16) derart ausgestaltet ist, dass sie kontinuierliche Änderungen der Kapazitäten erfasst und auswertet.

8. Füllstand-Messsystem nach einem der vorhergehenden Ansprüche, **dadurch gekennzeichnet, dass** die Auswertungselektronik (16) derart ausgestaltet ist, dass ein dem Füllstand des Behälters (5) entsprechendes Ausgangssignal über einen Bus verfügbar ist.

9. Füllstand-Messsystem nach einem der vorhergehenden Ansprüche, **gekennzeichnet durch** mindestens einen weiteren flexiblen Träger (20) mit weiteren Messelektroden (10a) und jeweils einer weiteren Auswertungselektronik (16) zur Erfassung des Füllstandes in dem Behälter (5).

10. Füllstand-Messsystem nach einem der vorhergehenden Ansprüche, **dadurch gekennzeichnet, dass** der flexible Träger (20) folienartig ist.
